# Europäisches Patentamt
## European Patent Office
## Office européen des brevets

(11) Publication number: **0 131 873**
**B1**

(12) # EUROPEAN PATENT SPECIFICATION

(45) Date of publication of patent specification: **12.10.88**

(51) Int. Cl.⁴: **G 02 F 1/133,** G 03 B 27/32, G 03 G 15/04

(21) Application number: **84107936.1**

(22) Date of filing: **06.07.84**

(54) Driving method of a liquid crystal switch for a printer, and printer therefor.

(30) Priority: **08.07.83 JP 123305/84**

(43) Date of publication of application: **23.01.85 Bulletin 85/04**

(45) Publication of the grant of the patent: **12.10.88 Bulletin 88/41**

(84) Designated Contracting States: **CH DE FR GB IT LI NL SE**

(56) References cited:
EP-A-0 032 362
US-A-4 334 734
US-A-4 343 009
US-A-4 408 201

(73) Proprietor: **HITACHI, LTD.**
**6, Kanda Surugadai 4-chome Chiyoda-ku Tokyo 100 (JP)**

(72) Inventor: **Umeda, Takao**
**1-19-3-301, Ishinazaka-cho**
**Hitachi-shi Ibaraki-ken (JP)**
Inventor: **Ohishi, Kazuya**
**2125-88, Muramatsu Toukai-mura**
**Naka-gun Ibaraki-ken (JP)**
Inventor: **Igawa, Tatuso**
**412-1, Kamiokashimo Sekinami-cho**
**Kitaibaraki-shi Ibaraki-ken (JP)**
Inventor: **Hori, Yasuro**
**3-19-19, Higashi-ohshima**
**Katsuta-shi Ibaraki-ken (JP)**
Inventor: **Nagae, Keiji**
**2670-13, Kanesawa-cho**
**Hitachi-shi Ibaraki-ken (JP)**
Inventor: **Isogai, Masato**
**3-17-2-406, Moriyama-cho**
**Hitachi-shi Ibaraki-ken (JP)**

(74) Representative: **Patentanwälte Beetz sen. - Beetz jun. Timpe - Siegfried - Schmitt-Fumian Steinsdorfstrasse 10 D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 131 873

## Description

The present invention relates to an electrophotographic line printer comprising liquid crystal switching elements and to the driving method therefor.

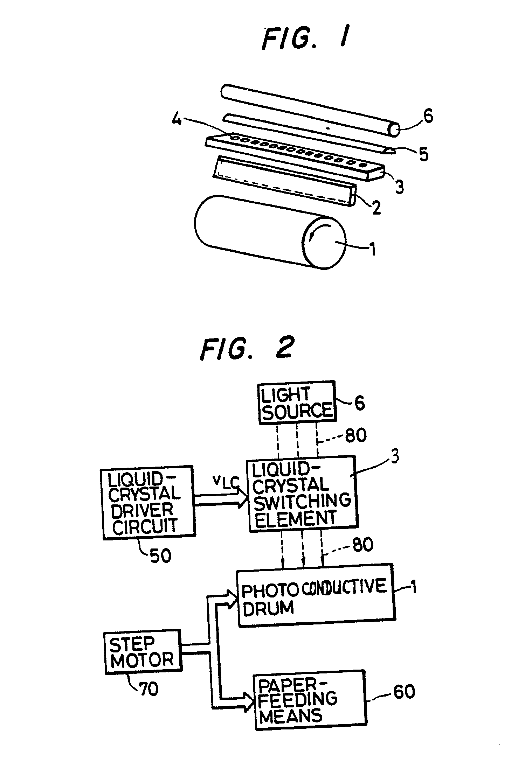

In recent years, compact electrophotographic printers have been investigated which use an optical signal generator composed of a liquid crystal switching element and a light source. The construction of such a compact printer is schematically shown in Fig. 1. The printing system comprises a liquid-crystal switching element 3 which is composed of about 2,000 shutter portions 4 of a very small area. The light emitted by a light source 6, such as a fluorescent lamp, is focussed onto the surface of the liquid crystal switching element 3 with a cylindrical lens 5. The light transmitted through the shutter portions which are selected by electrical signals, illuminates the surface of a photoconductive drum 1 through a lens system such as a linear Selfoc lens as a light focussing element 2. US—A—4343009 describes such a basic electrophotographic line printer structure. A line printer of this kind directly printing on light sensitive paper is known from US—A—4334734. The main characteristics required for the liquid crystal switching element is a high-speed response. In order to obtain a resolution of 10 dots/mm and a printing speed of 1 000 lines/min, it is necessary that the on/off cycle-time is less than 1 or 2 ms.

This high-speed response cannot be obtained using twisted nematic liquid crystals of the prior art. In JP—A—57-63509 a display system using a twisted nematic liquid crystal element with two-frequency addressing has been proposed. However, this type of liquid crystal material has the problem that the cut-off frequency $f_c$ varies widely with temperature. When used as a liquid crystal switching element for a printer, the temperature of the liquid crystals is increased (to about 40 to 50°C) by the heat of the light source, so that a temperature compensation is necessary. Thus, the use of twisted nematic liquid crystal elements with two-frequency addressing for electrophotographic printers incurs problems.

This type of liquid crystal elements has still another problem in that the reduction of the response time is limited to 1 to 2 ms, so that high-speed printing is not possible.

It is the object of the invention to provide an electrophotographic printer comprising a liquid crystal switching element and a driving method therefor, which can eliminate these defects and allow to accomplish high-quality prints at a high speed.

The above object is achieved according to claims 1 and 7. The dependent claims refer to preferred embodiments.

The method of driving an electrophotographic line printer comprising a photoconductive drum and a light switching element in which a liquid crystal material is sandwiched between a pair of plates provided with electrodes on adjacent surfaces thereof, different shutter portions of the switching element corresponding to the dots of a printing line is according to the invention characterized in that

—the liquid crystal material is a ferroelectric liquid crystal material with a chiral smectic C phase and/or a chiral smectic H phase,

—the recording period of each line consists of a period $T_1$ during which the photosensitive drum is exposed to the dots of light to be recorded, and a period $T_2$ during which the drum is moved to the next position, and

—within each recording period the equation

$$\int_{t_0}^{t_1} V_1 \, dt + \int_{t_2}^{t_3} V_2 \, dt = 0$$

is satisfied for the voltage $V_1$ applied to each shutter portion during each period $T_1$ and for the voltage $V_2$ applied to each shutter portion during each period $T_2$, $t_0$ and $t_1$ designating respectively the beginning and the end of the period $T_1$, and $t_2$ and $t_3$ designating respectively the beginning and the end of the period $T_2$.

The electrophotographic line printer according to the invention comprises

—a photoconductive drum,

—an optical writing unit for optically illuminating the photoconductive drum, including

—a light source system,

—a liquid crystal switching element provided between the light source system and the photoconductive drum and comprising a liquid crystal material sandwiched between a pair of plates provided with electrodes on adjacent surfaces thereof, different shutter portions of the switching element corresponding to the dots of a printing line, and

—a liquid crystal driver circuit,

—wherein the light source system is drivable to flash in synchronism with the switching of the liquid crystal switching element, and

—transferring and fixing unit for transferring a printed image from the photoconductive drum to paper and fixing the image thereon, and is characterized in that

—the liquid crystal switching element comprises a ferroelectric liquid crystal material with a chiral smectic C phase and/or a chiral smectic H phase, and

—the liquid crystal driver circuit is designed such that

2

—the recording period of each line consists of a period $T_1$ during which the photosensitive drum is exposed to the dots of light to be recorded, and a period $T_2$ during which the drum is moved to the next position, and
—within each recording period the equation

$$\int_{t_0}^{t_1} V_1\ dt + \int_{t_2}^{t_3} V_2\ dt = 0$$

is satisfied for the voltage $V_1$ applied to each shutter portion during each period $T_1$ and for the voltage $V_2$ applied to each shutter portion during each period $T_2$, $t_0$ and $t_1$ designating respectively the beginning and the end of the period $T_1$, and $t_2$ and $t_3$ designating respectively the beginning and the end of the period $T_2$.

EP—A—32 362 describes chiral smectic liquid crystal electro-optical devices, i.e. including a ferroelectric liquid crystal material, which can be used as high speed light shutters, however, the specific use of these devices in electrophotographic printing systems is not mentioned in this publication.

In a prefered ebodiment of the present invention, $T_1 \geq T_2$ and/or $t_1 = t_2$.

According to another preferred embodiment of the invention, a voltage with a peak of one polarity (e.g. negative) is applied within the period $T_2$, and preferably the voltage applied finally during the period $T_2$ has a peak of one polarity (e.g. negative).

According to another preferred embodiment of the invention, the intensity of the light incident on the liquid crystal switching element from the light source during the period $T_2$ is weaker than that during the period $T_1$, and is preferably substantially zero.

Fig. 2 is a schematic view of the construction of a printer in which the the present invention can be realized;

Fig. 3 shows the response of the molecules to an electric field of a ferroelectric liquid crystal used in embodiments of the invention;

Figs. 4 to 6 are schematic views of constructions of the liquid crystal switching elements used in embodiments of the invention;

Fig. 7 is a graph showing the relationship between the applied voltage and the optical transmission of the liquid crystal switching elements used in embodiments of the invention;

Figs. 8 to 11 are graphs illustrating characteristics of a first embodiment of the invention;

Figs. 12 to 15 are graphs of characteristics of a second embodiment of the invention, Fig. 13 referring to a corresponding circuit;

Figs. 16 and 17 are graphs of the characteristics of a third embodiment of the invention;

Figs. 18 to 22 are schematic representations for illustrating the principle of a fourth embodiment of the invention;

Figs. 23 and 24 are schematic representations of the construction embodying the fourth embodiment of the invention and a waveform graph of the operation thereof; and

Figs. 25 and 26 are a view of the construction of a fifth embodiment of the invention and a waveform graph showing the operation thereof.

The present invention will be described in the following in connection with embodiments thereof with reference to the drawings.

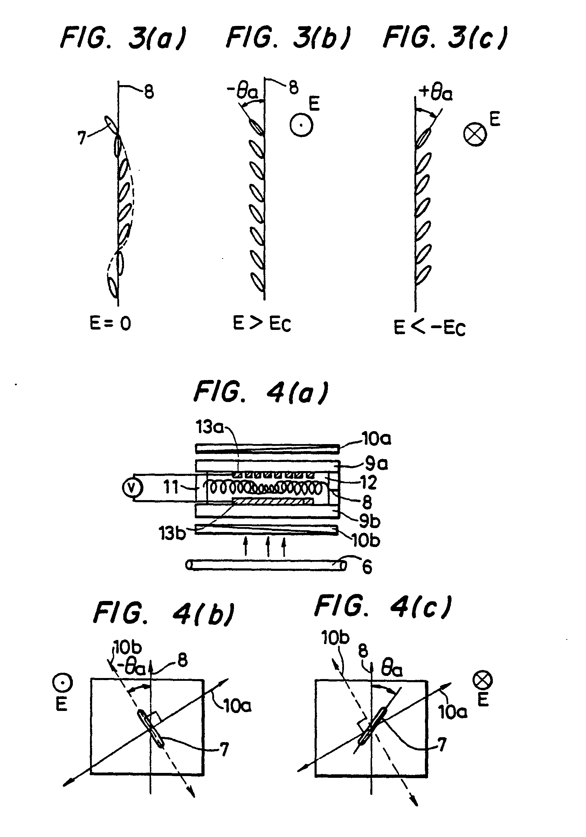

Fig. 2 is a schematical diagram of a printer used for the present invention. The printer comprises a photoconductive drum 1, a light source 6 such as a fluorescent lamp, a liquid-crystal switching element 3 using a ferroelectric liquid crystal material according to the invention, as will be described below, a liquid crystal driver circuit 50 which generates a voltage $V_{LC}$ to drive the liquid crystal switching element 3, paper feeding means 60 for feeding the paper to be printed and being linked to the photoconductive drum 1, and a step motor 70 which simultaneously actuates the photoconductive drum 1 and the paper feeding means; the light rays from the light source 6 are denoted by the reference numeral 80. The present invention is not directed to the structure of the printer itself; details of the printer structure are disclosed e.g. in JP—A—57/63509.

The electro-optical characteristics of the ferroelectric liquid crystal used in the present invention will be described in the following.

Ferroelectric liquid crystals include known liquid crystals which have a chiral smectic C(Sm\*C) phase or a chiral smectic H(Sm\*H) phase, such as those tabulated in Table 1 for example.

TABLE 1
(n: natural number)

| |
|---|
| $C_nH_{2n+1}O$—⬡—$CH=N$—⬡—$CH=CHC\overset{\overset{\displaystyle O}{\|}}{O}CH_2*\overset{\overset{\displaystyle CH_3}{\|}}{C}HC_2H_5$ <br><br> Ex. n=14 TDOBAMBC <br> n=12 DDOBAMBC <br> n=10 DOBAMBC <br> n=8 OOBAMBC <br> n=6 HOBAMBC |
| $C_nH_{2n+1}O$—⬡—$CH=N$—⬡—$CH=CHC\overset{\overset{\displaystyle O}{\|}}{O}CH_2*\overset{\overset{\displaystyle H}{\|}}{\underset{\underset{\displaystyle Cl}{\|}}{C}}CH_3$ <br><br> Ex. n=6 HOBACPC <br> n=8 OOBACPC <br> n=10 DOBACPC |
| $C_nH_{2n+1}O$—⬡—$CH=N$—⬡—$CH=\overset{\overset{\displaystyle Cl}{\|}}{C}—\overset{\overset{\displaystyle O}{\|}}{C}OCH_2*\overset{\overset{\displaystyle CH_3}{\|}}{C}HC_2H_5$ <br><br> Ex. n=8 OOBAMBCC |
| $C_nH_{2n+1}O$—⬡—$CH=N$—⬡—$CH=\overset{\overset{\displaystyle N\equiv CO}{\|\|\|}}{C}COCH_2*\overset{\overset{\displaystyle CH_3}{\|}}{C}HC_2H_5$ <br><br> Ex. n=10 DOBAMBCC |
| $C_nH_{2n+1}O$—⬡—$CH=N$—⬡—$CH=\overset{\overset{\displaystyle N\equiv CO}{\|\|\|}}{C}CCH_2*\overset{\overset{\displaystyle CH_3}{\|}}{C}HC_2H_5$ <br><br> Ex. n=14 TDOBAMBCC |

The states of these ferroelectric liquid crystal molecules under an applied voltage are known, e.g. from articles such as "Submicrosecond bistable electrooptic switching in liquid crystals", Appl. Phys. Lett. 36(11) (1980) 899—901, and will now be described with reference to Fig. 3.

In the initial state when no electric field is applied, as shown in Fig. 3(a), the ferroelectric liquid crystal molecules 7 are helically oriented at an angle $\theta_a$ with respect to the helix axis 8 (e.g., between 20 and 25 degrees for DOBAMBC).

If an electric field E higher than the threshold electric field $E_o$ is applied to the ferroelectric liquid crystal molecules 7, as shown in Fig. 3(b), the liquid crystal molecules 7 are oriented into a plane normal to the direction of the electric field E so that their long axes are at an angle of $-\theta_a$ to the helix axis 8, because they undergo a spontaneous polarization. If the polarity of the electric field E of Fig. 3(b) is inverted, on the other hand, the liquid crystal molecules 7 are oriented, as shown in Fig. 3(c), into the plane normal to the direction of the electric field E so that their long axes are at an angle of $\theta_a$ to the helix axis 8.

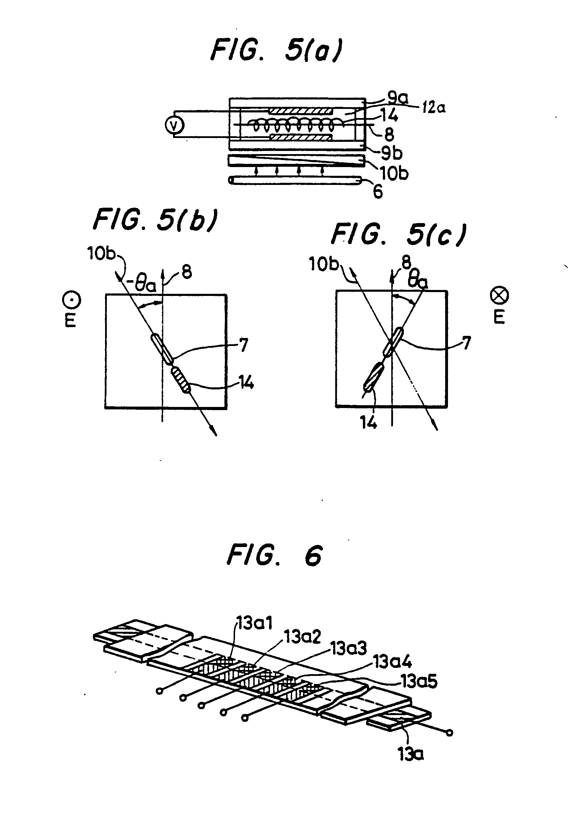

Figs. 4 and 5 are schematic sections through liquid crystal switching elements which are used in one embodiment of the present invention, and which make use of the electro-optic characteristics of the ferroelectric liquid crystal as described above. Fig. 6 is a schematic perspective view of the liquid crystal switching element of Figs. 4 or 5.

Fig. 4 shows an element in which two polarizing plates are used, and the optical anisotropy of the liquid crystal molecules is utilized.

In Fig. 4(a), a liquid crystal 12 which is one of ferroelectric liquid crystals of Table 1 is sandwiched between two transparent plates 9a and 9b, the adjacent principal surfaces of which are oriented

# 0 131 873

horizontally. The cell is sealed by means of a sealing material 11. Initially, the helix axis 8 is generally parallel to the principal surfaces of the plates 9a and 9b. Those portions which are adjacent to transparent conductive films 13a and 13b formed on the adjacent surfaces of the plates 9a and 9b, respectively, form shutter portions.

Within each shutter portion, an electric field can be applied to the liquid crystal layer between the adjacent transparent conductive films 13a and 13b. Fig. 4(b) corresponds to the case in which the electric field E applied to the liquid crystal layer is directed from the reverse side upwards through the plane of the paper ("negative" voltage application). Under these conditions, the liquid crystal molecules 7 are oriented as in Fig. 3(b) so that their long axes are at the angle of $-\theta_a$ to the helix axis 8 (e.g., 22,5°). Two polarizing plates 10a, 10b are provided behind the plates 9a and 9b. The polarization axes of the two polarizing plates 10a and 10b are crossed at an angle of 90°, and the polarization axis of the polarizing plate 10b is oriented in the same direction as the orientation direction of the liquid crystal molecules 7 (i.e. at an angle of $-\theta_a$ with respect to the helix axis 8. As a result, as shown in Fig. 4(b), the light incident on the liquid-crystal switching element from the light source 6 is shut by the polarizing plate 10a so that it is not transmitted therethrough.

If the electric field E applied to the liquid crystal 12 is directed downwards through the plane of the paper ("positive" voltage application), the liquid crystal molecules 7 fail to align with the direction of either of the polarization axes of the polarizing plates 10a and 10b, as shown in Fig. 4(c), so that the light is transmitted through the liquid-crystal switching element. Fig. 5 shows a guest-host type liquid crystal switching element in which only one polarizing plate is used, and dichroic dyes are admixed to the ferroelectric liquid crystal material so that the selective absorption of light by the dye can be utilized.

As compared with the switching element of Fig. 4(a), one of the polarizing plates, 10a, is omitted, and the liquid crystal 12a comprises a dichroic dye, which is an anthraquinone derivative, an azo derivative, a diazo derivative, a merocyanine derivative and/or a tetrazine derivative, etc. When a negative voltage is applied in the same way as described with reference to Fig. 3(b), the liquid crystal molecules 7 and the dichroic dye molecules 14 are aligned so that their long axes are at an angle of $-V_a$ with the helix axis 8. If the long axes and absorption axes of the dichroic dye molecules 14 are in the same direction, when the polarizing plate 10b is arranged so that its polaring axis is in the same direction as the orientation direction of the liquid crystal molecules 7, the light entering the liquid crystal layer from the light source 6 through the polarizing plate 10b is absorbed therein, because the direction of vibration of the polarized light is parallel to the absorption axes of the dichroic dye molecules 14. If a black dye is used as the dichroic dye, light is not transmitted through the liquid crystal layer. When a positive voltage is applied, on the other hand, the liquid crystal molecules 7 and the dichroic dye molecules 14 are oriented as shown in Fig. 5(c), so that the direction of vibration of the polarized light and the direction of the absorption axes of the dichroic dye molecules 14 do not coincide. As a result, light is transmitted through the liqud-crystal switching element without absorption by the dichroic dye.

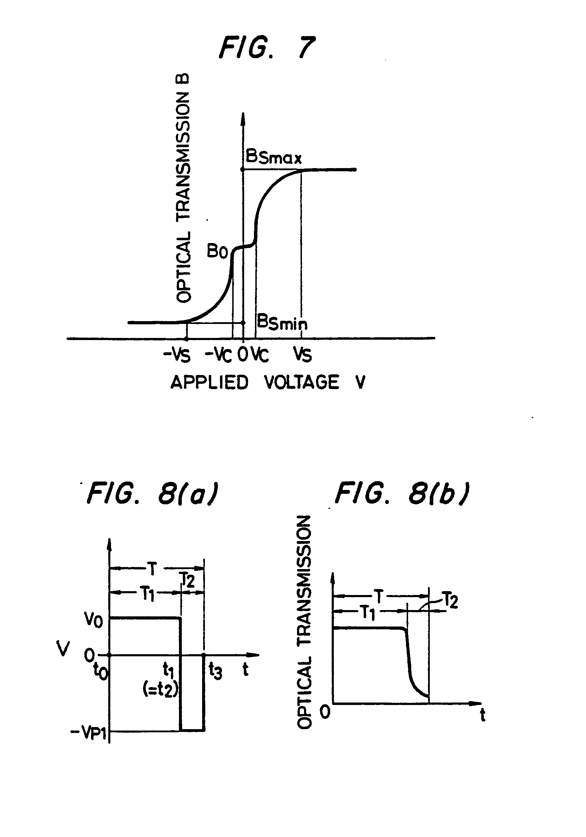

As has been described above, light is transmitted if a positive voltage is applied, but is shut if a negative voltage is applied. The response of the ferroelectric liquid crystal molecules 7 is so fast that the switching speed of the switching element can be easily equal to or less than 1 ms. Fig. 6 shows a liquid crystal switching element comprising five shutter portions formed by a conductive film 13a and overlapping strip-shaped conductive films 13a1 to 13a5. Fig. 7 shows the relationship between the applied voltage (peak value) V and the optical transmission B of the liquid crystal switching element. $V_c$ denotes the critical voltage.

(a) If $-V_c \leqq$ applied voltage $V \leqq V_c$ the optical transmission B does not change at $B_0$.

(b) If the applied voltage V is higher than the critical voltage $V_c$, the optical transmission B starts to increase until it reaches a saturation value $B_{Smax}$ at $V_S$.

(c) If the absolute value of the applied voltage V exceeds $V_c$ when its polarity is negative, the optical transmission B starts to decrease until it reaches a saturation value $V_{Smin}$ at $-V_S$. Thus, the liquid crystal switching element using a ferroelectric liquid crystal either allows light to pass or shuts it, depending on whether the polarity of the applied voltage is positive or negative.

## Embodiment 1

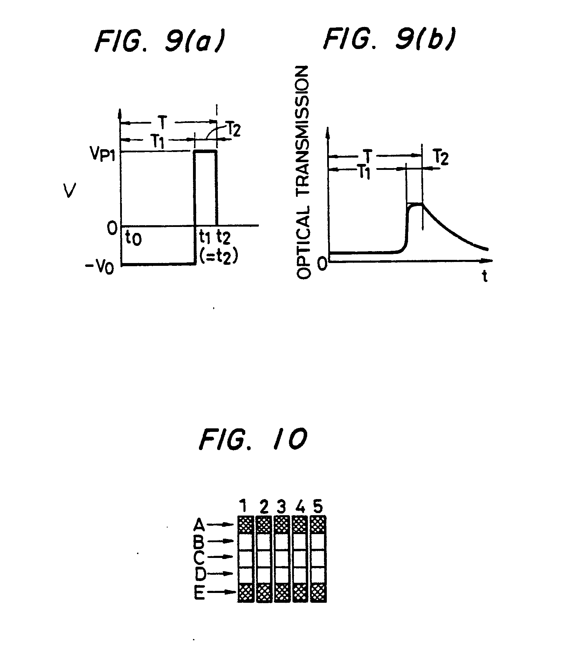

The driving method of a liquid-crystal switching element of a printer according to a first embodiment of the present invention will now be described with reference to Figs. 8 and 9. First, it is assumed that a group of dots shown in Fig. 10 are to be printed on the photoconductive drum. The hatched dots A-1, A-2, A-3, A-4, A-5, E-1, E-2, E-3, E-4 and E-5 are those which are exposed to the light from the light source which has been transmitted through the liquid crystal switching element ("exposed dots"). The blank dots B-1, B-2, B-3, B-4, B-5, C-1, C-2, C-3, C-4, C-5, D-1, D-2, D-3, D-4 and D-5 are those which have not been exposed to the light from the light source, ("unexposed dots"). If a one-line drive period is designated as T, the exposed dots A-1, A-2, A-3, A-4 and A-5 on line A are formed during the initial one-line drive period T by five shutter portions, and the photoconductive drum is then turned to move its photoconductive surface and the paper is fed on. During the next one-line drive period T, the unexposed dots B-1, B-2, B-3, B-4 and B-5 on line B are formed, and the paper-feeding operation is repeated. The dots on lines C, D and E are similarly formed.

Fig. 8(a) shows the waveform of the voltage V applied during the one-line drive period T to the ferroelectric liquid crystal forming the individual shutter portions of the liquid crystal switching element when the exposed dots A-1, A-2, A-3, A-4, A-5, E-1, E-2, E-3, E-4 and E-5 are formed. Fig. 8(b) shows the

5

optical transmission of the liquid crystal switching element. $T_1$ denotes the period during which a voltage is applied to the liquid crystal so that the light from the light source is either transmitted through or is shut by the liquid crystal switching element so that the photoconductive surface of the photoconductive drum is printed ("print period"), and $T_2$ denotes the period during which the photoconductive drum is moved to the next position ("drive period").

When a positive pulse voltage with a peak value $V_0$ (between 5 and 30 V) and a pulse width corresponding to $T_1$ (between 500 µs and 1200 µs) is applied from time $t_0$ to time $t_1$ during the print period $T_1$, as shown in Fig. 8(a), the light from the light source is transmitted through the liquid crystal switching element to expose the dots. When a negative pulse voltage with a peak value of $-V_{p1}$ and a pulse width corresponding to $T_2$ is applied from time $t_2(=t_1)$ to time $t_3$ during the drive period $T_2$, however, the light is abruptly shut as may be seen from Fig. 8(b). By repeating these operations during a predetermined period $T$ (between 1 ms and 30 ms) such that no flickering is generated, the average optical transmission can be made sufficiently high.

During this time, the DC component of the voltage $V_1$ determining the optical transmission for the printing operation is expressed by

$$\int_{t_0}^{t_1} V_1 dt = V_0 \cdot T_1 \tag{1}$$

and the DC component of the voltage $V_2$ applied during the drive period $T_2$ is expressed by

$$\int_{t_2}^{t_3} V_2 dt = -V_{p1} \cdot T_2 \tag{2}$$

where $V_0$, $V_{p1}$, $T_1$ and $T_3$ are determined to satisfy the following equation:

$$\int_{t_0}^{t_4} V_1 dt + \int_{t_2}^{t_3} V_2 dt = V_0 \cdot T_1 - V_{p1} \cdot T_2 = 0 \tag{3}$$

Consequently, the average value of the voltage applied to the liquid crystal is zero and has no DC component, so that the ferroelectric liquid crystal is not affected by electrochemical reactions, which could lead to a deterioration of the liquid crystal.

Fig. 9(a) shows the waveform of the voltage $V$ applied during the one-line recording $T$ to the liquid crystal forming the individual shutter portions of the liquid crystal switching element, when the unexposed dots B-1, B-2, B-3, B-4, B-5, C-1, C-2, C-3, C-4, C-5, D-1, D-2, D-3, D-4 and D-5 are formed. Fig. 9(b) shows the corresponding optical transmission of the liquid crystal switching element.

When a negative pulse voltage with a peak value of $-V_0$ and a pulse width corresponding to $T_1$ is applied from time $t_0$ to time $t_1$ during the print period $T_1$, the light from the light source is shut, as shown in Fig. 9(b), by the liquid crystal switching element so that the respective dots are not exposed. From time $t_2$ ($=t_1$) to time $t_3$, a positive pulse voltage with a peak value $V_{p1}$ and a pulse width corresponding to $T_2$ is applied during the drive period $T_2$.

During this time, the relationship between the DC component of the voltage $V_1$ applied to the ferroelectric liquid crystal during the print period $T_1$ and the DC component of the voltage $V_2$ applied during the drive period $T_2$ is expressed by

$$\int_{t_0}^{t_1} V_1 dt + \int_{t_2}^{t_3} V_2 dt = -V_0 \cdot T_1 + V_{p1} \cdot T_2 = 0 \tag{4}$$

Also according to Fig. 9, the average value of the voltage applied to the liquid crystal is zero and has no DC component, so that no deterioration of the liquid crystal induced by an electrochemical reaction can occur. As a result, a high-speed, high-quality printing operation is possible.

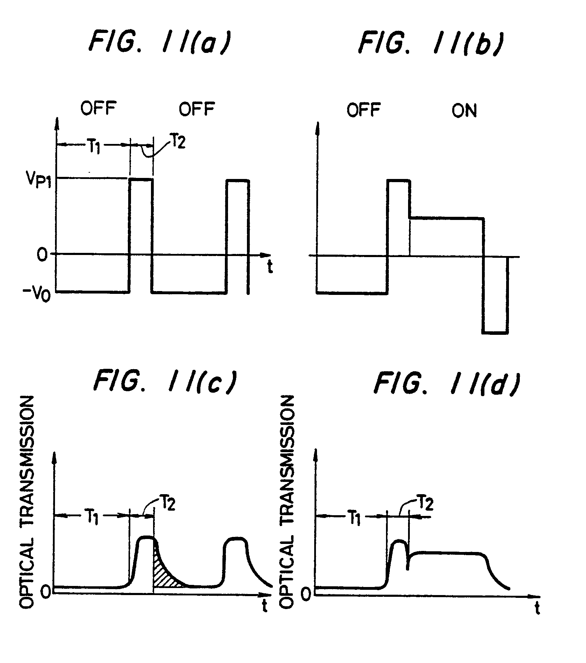

A practical application of the element to an optical switch array of a line printer will now be considered. Fig. 11(a) shows the case in which dots are not exposed in the first print period (OFF) and also in the next print period. Fig. 11(b) shows the case in which dots are not exposed in the first print period (OFF), but exposed dots are formed in the next print period (ON). The voltage waveform of Fig. 11(a) corresponds to that of Fig. 9(a) with one repetition. The optical transmission during this time is shown in Fig. 11(c), in which there is not only an optical leakage during the drive period $T_2$, but also an optical leakage as a result of a response delay (e.g., about 0.5 ms when $V_{p1}=40$ V and $-V_0=20$ V), as shown by the hatched region, during the period in which the dots remain unexposed. Fig. 11(b) shows a combination of the waveforms of Figs. 8(a) and Fig. 9(a). The optical transmission during this time is shown in Fig. 11(d), illustrating the optical leakage during the drive period $T_2$ which increases in the same way as in Figs. 11(a) and 11(c).

# 0 131 873

Embodiment 2

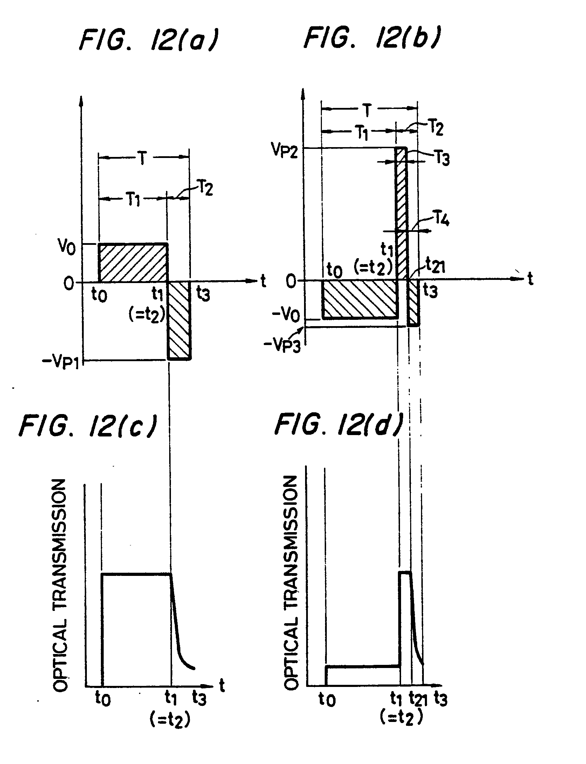

The drive voltage waveform of the liquid crystal switching element of a line printer according to a second embodiment of the present invention is shown in Fig. 12, wherein the same abbreviations as in Figs. 8 and 9 are used for identical or corresponding items.

Fig. 12(a) shows the waveform of the voltage applied during one line recording period T to the ferroelectric liquid crystal forming the individual shutter portions of the liquid crystal switching element, when the exposed dots are formed, and Fig. 12(c) shows the optical transmission during that time. Figs. 12(a) and (c) correspond to Figs. 8(a) and (b).

Fig. 12(b) shows the waveform of the voltage applied during one line recording period T to the liquid crystal forming the individual shutter portions of the liquid crystal switching element, when the dots are not exposed, and Fig. 12(d) shows the optical transmission during that time. As shown in Fig. 12(b), a negative pulse voltage with a peak value of $-V_0$ and a pulse width corresponding to $T_1$ is applied from time $t_0$ to $t_1$ during the print period $T_1$ (unexposed dots). During the drive period $T_2$ from time $t_1$ (=$t_2$) to time $t_3$, a positive pulse voltage with a peak value $V_{p2}$ and a pulse width corresponding to $T_3$ is first applied to the liquid crystal during a period $T_3$ from time $t_1$ (=$t_2$) to time $t_{21}$, and a negative pulse voltage with a peak of $-V_{p3}$ and a pulse width corresponding to $T_4$ is then applied to the liquid crystal during a period $T_4$ from time $t_{21}$ to time $t_3$. The values of $T_1$, $T_2$, $T_3$, $T_4$, $V_0$, $V_{p1}$, $V_{p2}$ and $V_{p3}$ are specified in Table 2.

TABLE 2

| | T (ms) | | | | $V_0$ (V) | $V_{p1}$ (V) | $V_{p2}$ (V) | $V_{p3}$ (V) |
|---|---|---|---|---|---|---|---|---|
| | $T_1$ | $T_2$ | $T_3$ | $T_4$ | | | | |
| Example 1 | 1,8 | | | | 20 | 40 | 54 | 30 |
| | 1,2 | 0,6 | 0,5 | 0,1 | | | | |
| Example 2 | 1,4 | | | | 30 | 40 | 54 | 30 |
| | 0,8 | 0,6 | 0,5 | 0,1 | | | | |

During this time, the relationship between the DC component of the voltage $V_1$ applied to the liquid crystal during the print period $T_1$ and the DC component of the voltage $V_2$ applied during the drive period $T_2$ is identical to that of equation (4) when exposed dots are formed, but is expressed by the following equation (5) when dots remain unexposed:

$$\int_{t_0}^{t_1} V_1 dt + \int_{t_2}^{t_3} V_2 dt = -V_0 \cdot T_1 + V_{p2} \cdot T_3 - V_{p3} \cdot T_4 = 0 \tag{5}$$

Also in this embodiment the average value of the voltage applied to the liquid crystal is zero and has no DC component, so that a deterioration of the liquid crystal induced by an electrochemical reaction does not occur.

In the present invention, moreover, a negative voltage is applied to the ferroelectric liquid crystal during the period $T_4$ in the drive period $T_2$, when the unexposed dots are recorded, whereby the arrangement of polarizing axes of two polarizing plates 10a, 10b is as shown in Fig. 4. As a result optical leakage during the drive period is reduced, as shown in Fig. 12(d), so much that the effect of optical leakage during the next one-line drive period is eliminated.

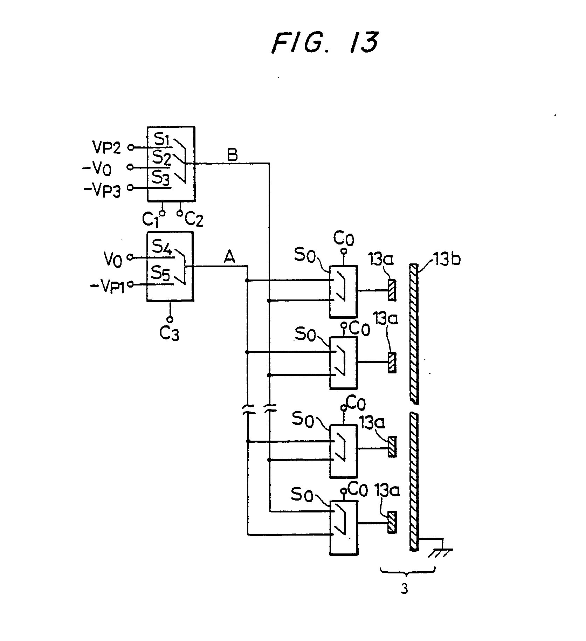

Fig. 13 shows an example of a specific circuit realizing the drive voltage waveforms of Fig. 12.

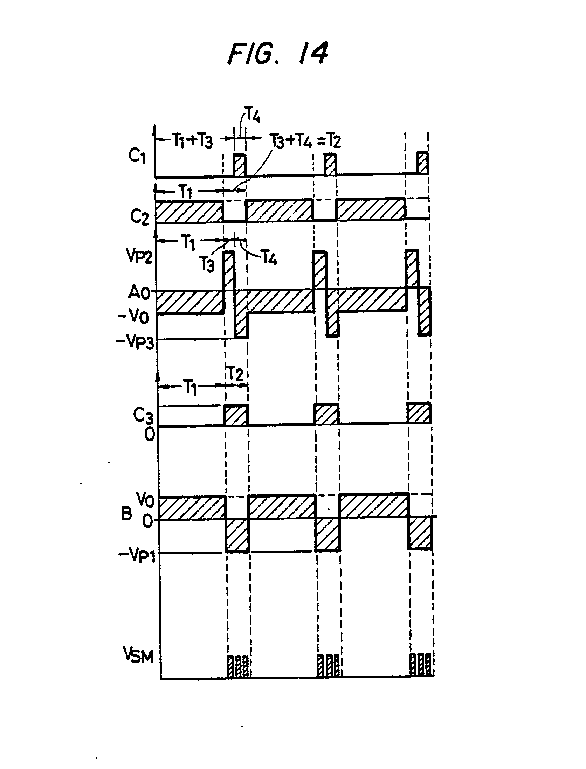

Fig. 14 shows individual signal voltage waveforms and the waveform of an input signal $V_{SM}$ applied to the step motor 70.

One transparent conductive film 13a of a liquid-crystal switching element 3 is connected to a switch $S_0$ used for selecting between a signal A for the formation of exposed dots and a signal B for the generation of unexposed dots in accordance with a control signal $C_0$. Another transparent conductive film 13b is held at a fixed potential (e.g., ground potential). The signal A for the formation of exposed dots is generated by selecting voltages $V_0$ and $-V_{p1}$ in accordance with a control signal $C_3$ by operating the switches $S_4$ and $S_5$. The signal B for the generation of unexposed dots is generated by selecting voltages $V_{p2}$, $-V_0$ and $-V_{p3}$ in accordance with control signals $C_1$ and $C_2$ by operating the switches $S_1$, $S_2$ and $S_3$. The truth table for the operation of the switches $S_1$ to $S_5$ is given in Tables 3 and 4.

7

**0 131 873**

TABLE 3

| $C_1$ | $C_2$ | $S_1$ | $S_2$ | $S_3$ | Output A |
|---|---|---|---|---|---|
| 0 | 0 | 1 | 0 | 0 | $V_{p2}$ |
| 0 | 1 | 0 | 1 | 0 | $-V_0$ |
| 1 | 0 | 0 | 0 | 1 | $-V_{p3}$ |

TABLE 4

| $C_3$ | $S_4$ | $S_5$ | Output B |
|---|---|---|---|
| 0 | 0 | 1 | $V_0$ |
| 1 | 1 | 0 | $-V_{p1}$ |

Because of the mechanism of the printer, after printing on the photoconductive member, the photoconductive drum is moved and the surface is contacted with a toner, whereupon the toner image is transferred to the paper. The period $T_1$ therefore precedes the period $T_2$. If $T_3 < T_4$, moreover, optical leakage can be further prevented.

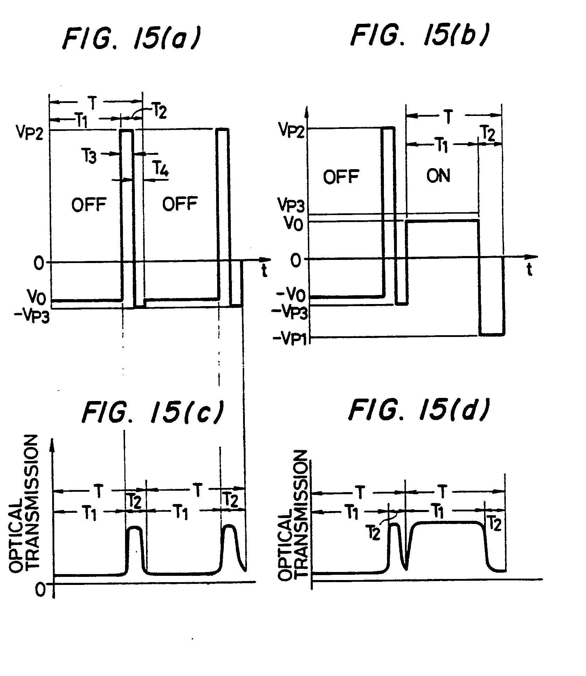

Fig. 15 is a voltage waveform chart of the second embodiment of the present invention showing a two-line drive period.

Fig. 15(a) shows the waveform of the voltage applied to the liquid crystal when unexposed dots are generated in the first print period (OFF), and unexposed dots are also generated in the next print period. Fig. 15(c) shows the optical transmission during that time. Fig. 15(b) shows the waveform of the voltage applied to the liquid crystal when unexposed dots are generated in the first print period and exposed dots are formed in the next print period (ON).

Embodiment 3

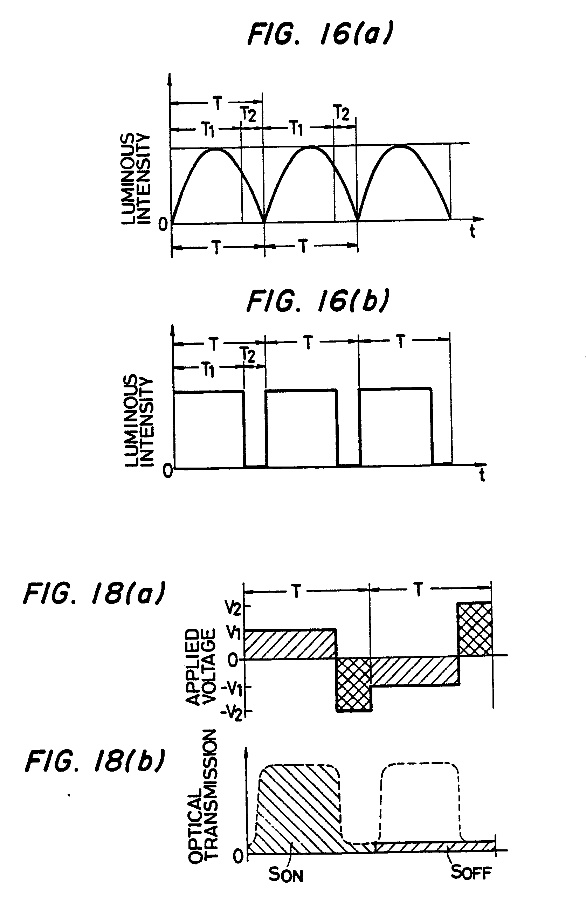

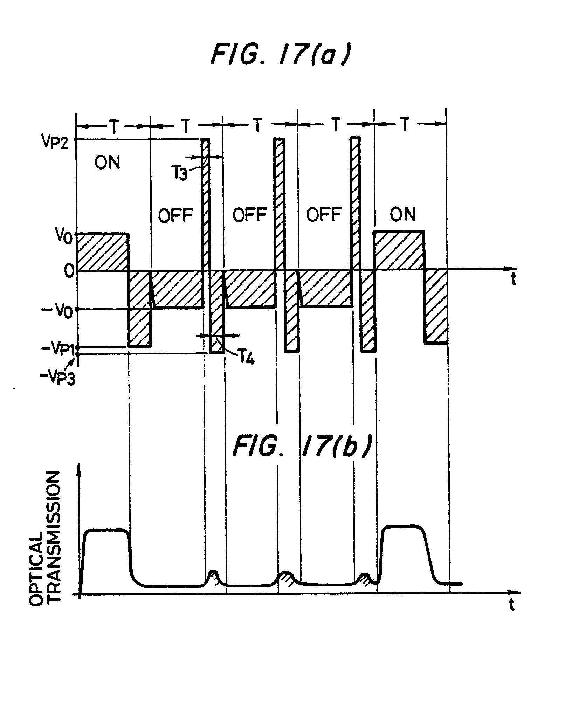

Figs. 16 and 17 refer to a third embodiment of the present invention.

In this embodiment, the drive of the light source and the drive of the liquid crystal switching element are synchronized with each other.

Fig. 16 shows the luminous intensity of the light source. In Fig. 16(a), the lighting voltage of the light source, such as a fluorescent lamp has a sine wave form with a frequency of 1/2T, and the luminous intensity of the light source is reduced during the drive period $T_2$. Fig. 17(a) shows the waveform of the voltage applied to the liquid crystal when the drive is performed under drive conditions set by the light source of Fig. 16(a), and Fig. 17(b) shows the optical transmission during that time.

Fig. 16(b) shows a further improvement in which optical leakage can be eliminated by reducing the luminous intensity of the light source during the drive period $T_2$ to zero.

Another method of making the intensity of the light from the light source entering the liquid crystal switching element during the drive period $T_2$ weaker than that during the print period $T_1$ uses a shielding plate for shutting off the light during the period $T_2$ which is interposed between the liquid crystal switching element 3 and the cylindrical lens 5 of Fig. 1, and is as effective as the method of Figs. 16(a) and (b).

Embodiment 4

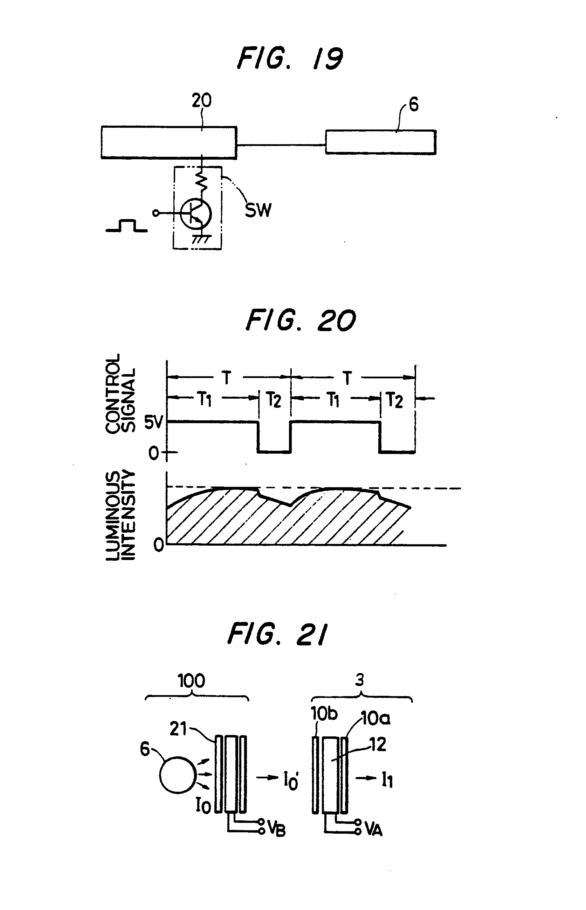

Fig. 18 shows the operating waveform of a fourth embodiment in which the contrast is improved. The leakage of the transmitted light is remarkably reduced, as shown by $S_{OFF}$ in Fig. 18(b), during an OFF cycle by a pulse modulation of the light source 6 whereby the light incident on the liquid crystal switching element is pulsed and flashes in synchronism with the drive voltage of the liquid crystal switching element, as shown by the broken line. As a result, a contrast ratio ($=S_{ON}/S_{OFF}$) of the liquid crystal switching element higher than 10 can be realized.

In view of the costs, the life and the lighting circuit of the light source, is preferred to use a fluorescent lamp as the light source for the liquid crystal switching element. Fluorescent lamps are particularly advantageous in that they are available for a variety of monochromatic light, such as blue, green, yellow or red, depending on the composition of the fluorescent substance, and in that they can be used in various ways in accordance with the characteristics of the photoconductive element used.

Fig. 19 shows a schematic circuit for realizing the waveform of Fig. 18, in which the light of the light source 6 has a fluorescent lamp is flashing by interrupting the lamp current.

In Fig. 19, the lamp current is turned on and off by a TTL signal supplied to a high-frequency lighter 20 driving a switching circuit SW, so that the switching circuit is conductive at a high ("H") level and blocked at a low ("L") level.

8

**0 131 873**

Fig. 20 shows the waveform obtained when the embodiment of Fig. 19 is operated, and the relationship between the waveform of the signal voltage and the change of the luminous intensity of the fluorescent lamp.

In these Figures, the embodiment is shown in operation. In the present embodiment, the high-frequency lighter 20 is turned off to cut the current when the signal voltage reaches the "L" level at the period $T_2$. The luminous intensity of the lamps is slightly reduced because of the afterglow of the fluorescent substance so that a flashing light according to the broken line in Fig. 18(b) cannot be obtained. Of course, this problem does not exist if the fluorescent lamp used has no afterglow, however, the commercially available fluorescent lamps intentionally have as much afterglow as possible, and accordingly, the above problem cannot be solved by selecting a suitable fluorescent lamp.

Therefore, the following means are adopted to solve the problem as illustrated in Fig. 21. The fluorescent lamp 6 is continuously operated with a luminous intensity $I_0$, and an additional ferroelectric liquid crystal panel 21 is disposed in front of the liquid crystal switching element 3 and operated so that optical pulses $I_0'$ transmitted through the liquid crystal panel 21 may be generated which correspond to the flashing light in Fig. 18, by suitably selecting the waveform of the drive voltage $V_b$ of the liquid crystal panel 21. The resulting luminous intensity after the liquid crystal 12 is $I_1$.

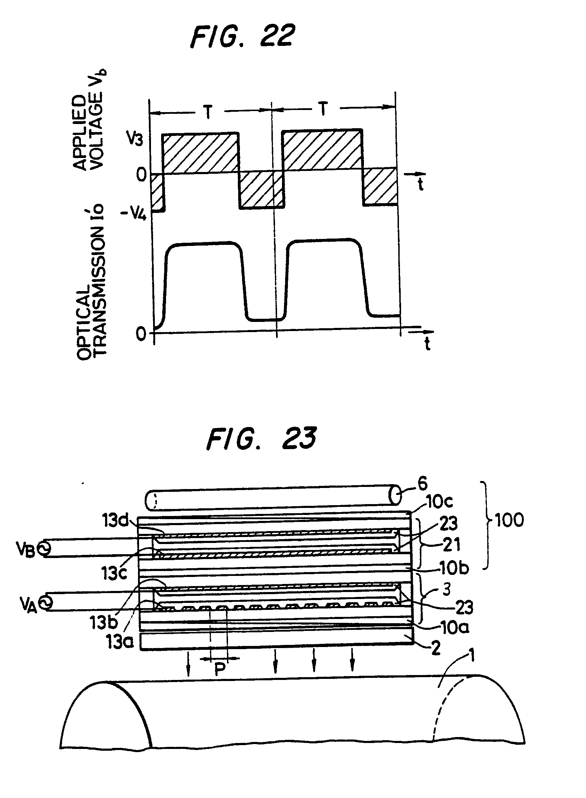

Fig. 22 is a characteristic graph showing the results of the printer of Fig. 21 and makes it apparent that a practically ideal flashing light is obtained. Thus, a light source system 100 comprises a fluorescent lamp as the light source 6 and the pulse modulated liquid crystal panel 21.

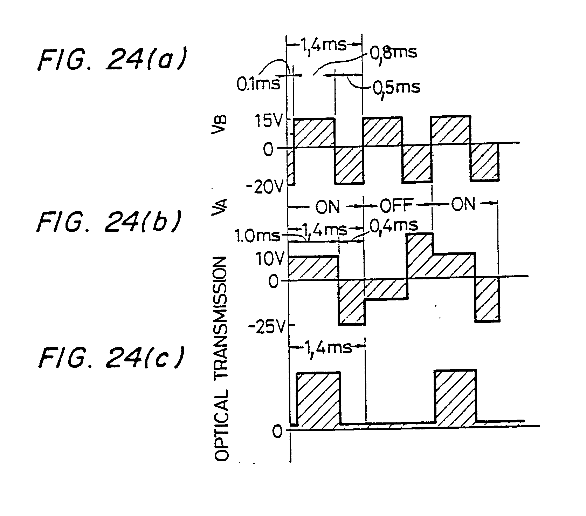

Fig. 23 shows the structure of the embodiment of a light writing unit explained in Figs. 21 and 22, and Figs. 24(a) to (c) show the waveforms of the drive voltage of this embodiment.

As shown, the light source system 100 is composed of the fluorescent lamp as light source 6, the liquid crystal panel 21 for pulse modulating the light from the fluorescent light source 6, and the polarizing plates 10b and 10c. On the other hand, the liquid crystal switching element 3 is composed of the polarizing plates 10a and 10b and the minute electrode substrates sandwiching the ferroelectric liquid crystal. The light writing unit is constructed of the light source system 100, the liquid crystal switching elmeent 3 and the light focusing element 2. The liquid crystal 12 is of DOBAMBC as defined in Table 1 and has a thickness of 4 µm. An orientation layer 23 is made of a rubbed organic film. The liquid crystal switching element 3 has its 2000 signal electrodes 13d arranged at a pitch of 100 µm.

Fig. 14 shows the relationship between the waveforms of the drive voltages $V_B$ and $V_A$ of the liquid crystal panel 21 and the liquid crystal switching element 3 and the optical pulses incident on the photoconductive drum 1 from the light source 6. The one-line drive period T is 1,4 ms, which corresponds to a printing speed of 70 mm/s. The waveforms of the voltages $V_A$ and $V_B$ are generated on the basis of a clock signal from a computer and are synchronized with each other. Incidentally, the waveform of $V_A$ corresponds to a repeated switching ON—OFF—ON. The temperature of the liquid crystal panel is held at 80°C, at which the DOBAMBC exhibits a SmC* phase. The measurements of the characteristics have revealed that the sum of the rise and fall times of the optical printing pulses is 0,5 ms, and that a contrast ratio of 10 to 15 can be achieved.

Printing experiments have been conducted with use of a Se photoconductive drum 1 and an aperture type 30 W blue fluorescent lamp as the light source 6. It has been proven that prints at a predetermined speed of 70 mm/s could be made, which shows the merits of the conception of the printer according to the invention.

Embodiment 5

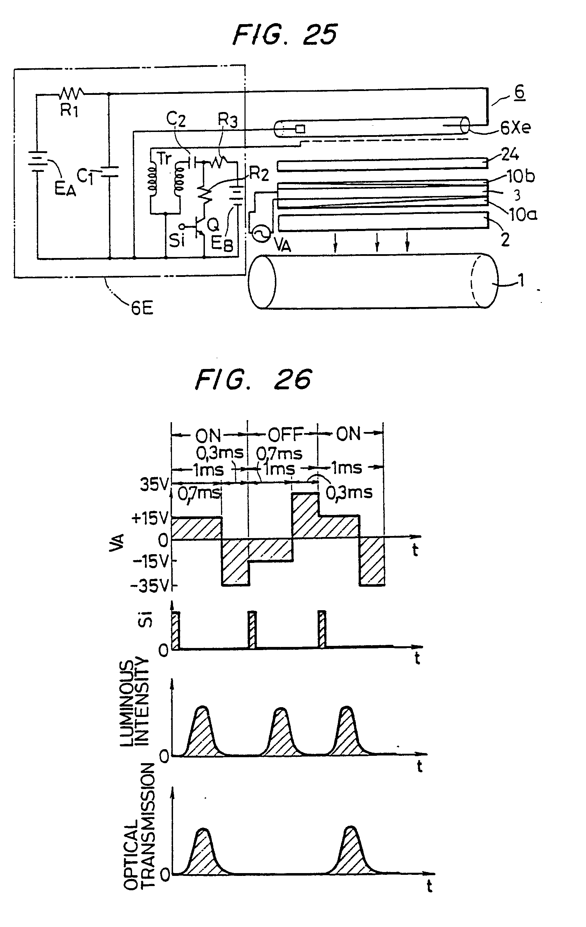

Figs. 25 and 26 show a fifth embodiment of the present invention. Fig. 25 shows the construction, and Fig. 26 shows the waveforms of the device of Fig. 25 in operation.

In Fig. 25, the light source 6 is a 500 W xenon flash lamp 6Xe. The lighting circuit 6E is composed of batteries as current sources $E_A$ and $E_B$, a transistor Q, resistors $R_1$ to $R_3$, capacitors $C_1$ nd $C_2$, and an arc transformer $T_r$.

By applying a lighting trigger signal Si to the base of the transistor Q, the xenon lamp 6Xe is lit. This lamp has a higher luminous energy than a fluorescent lamp by one or two orders of magnitude. Since it emits a high energy in the infrared region, a bandpass filter 24 for cutting the infrared radiation is interposed between the liquid crystal switching element 3 and the xenon lamp 6Xe.

Thus, the light passed through the liquid crystal switching element 3 on the basis of the data signal of the computer is focussed on the surface of the photoconductive drum 1 by means of the light focussing element 2. Incidentally, the liquid crystal switching element 3 used is the same as in the foregoing embodiments.

Fig. 26 shows the waveforms of the lighting trigger signal $S_I$, the luminous pulses of the xenon lamp 6Xe, and the printing pulses and the voltage $V_A$ which is applied to the conductive film 13a as signal electrode and the conductive film 13b as common electrode of the liquid crystal switching element 3. According to this embodiment, the contrast ratio can be higher than 10. Since the xenon lamp 6Xe has a much higher luminous energy than a fluorescent lamp, a higher sprinting speed than in the foregoing embodiments could be realized. The one-line drive time was 1 ms, which corresponds to a printing speed of 100 mm/s.

9

Moreover, the printing experiments using an OPC photoconductive drum 1 have revealed that prints with a resolution of 10 lines/mm and a printing speed of 100 mm/s could be achieved.

This embodiment is suitable for high-speed printing because the light energy is higher than with use of a fluorescent lamp, although the lighting system is larger.

Incidentally, in the foregoing first to fourth embodiments, a fluorescent lamp was used as the light source 6. Even in the other embodiments, however, in which the fluorescent lamp may be replaced by a halogen lamp or a xenon lamp (of continuous illuminating type), the same effects can be obtained by modulating the light of the light source to obtain flashing light by the use of the pulse modulating liquid crystal panel 21 described above. In this case, it is preferred to interpose the bandpass filter 24 for cutting the infrared radiation between the light source 6 and the liquid crystal panel 21.

In the embodiments of the present invention described above, a static drive has been used as an example. However, the present invention can also be applied to a dynamic drive such as sequential line scanning or sequential dot scanning systems.

In the first to fifth embodiments of the present invention thus far described, as shown in Figs. 4 and 5, the direction of the polarization axis of the polarizing plate 108 is aligned with that of the long axes of the ferroelectric liquid crystal molecules when a negative voltage and an electric field of $-E$ are applied thereto. However, the direction of the polarization axis of the polarizing plate 10b can also be aligned with that of the long axes of the liquid crystal molecules when a positive voltage and an electric field of $+E$ are applied. In this modification, the variations in brightness (i.e., the transmission and blocking) of the light are the reverse of those of the first to fifth embodiments.

As may be seen from the foregoing description the conception of the present invention makes high-quality, high-speed printing feasible.

## Claims

1. A method of driving an electrophotographic line printer comprising a photoconductive drum and a liquid crystal switching element in which a liquid crystal material is sandwiched between a pair of plates provided with electrodes on adjacent surfaces thereof, different shutter portions of the switching element corresponding to the dots of a printing line, characterized in that
—the liquid crystal material is a ferroelectric liquid crystal material with a chiral smectic C phase and/or a chiral smectic H phase,
—the recording period T of each line consists of a print period $T_1$ during which the photoconductive drum is exposed to the dots of light to be recorded, and a drive period $T_2$ during which the drum is moved to the next position, and
—within each recording period the equation

$$\int_{t_0}^{t_1} V_1 dt + \int_{t_2}^{t_3} V_2 dt = 0$$

is satisfied for the voltage $V_1$ applied to each shutter portion during each print period $T_1$ and for the voltage $V_2$ applied to each shutter portion during each drive period $T_2$, $t_0$ and $t_1$ designating respectively the beginning and the end of the print period $T_1$, and $t_2$ and $t_3$ designating respectively the beginning and the end of the drive period $T_2$.

2. The method according to claim 1, characterized in that $t_1 = t_2$.

3. The method according to claim 1 or 2, characterized in that $T_1 \geqq T_2$.

4. The method according to one of claims 1 to 3, characterized in that a voltage with a peak of one polarity is applied within the drive period $T_2$.

5. The method according to one of claims 1 to 4, characterized in that the intensity of light from the light source incident on the light switching element during the drive period $T_2$ is weaker than that during the print period $T_1$.

6. The method according to claim 5, characterized in that the intensity of the light incident on the light switching element during the drive period $T_2$ is substantially zero.

7. An electrophotographic line printer comprising
—a photoconductive drum (1),
—an optical writing unit for optically illuminating the photoconductive drum (1), including
—a light source system (5, 6),
—a liquid crystal switching element (3) provided between the light source system (5, 6) and the photoconductive drum (1) and comprising a liquid crystal material sandwiched between a pair of plates provided with electrodes on adjacent surfaces thereof, different shutter portions of the switching element corresponding to the dots of a printing line, and
—a liquid crystal driver circuit,
—wherein the light source system (5, 6) is drivable to flash in synchronism with the switching of the liquid crystal switching element (3), and

—a transferring and fixing unit for transferring a printed image from the photoconductive drum (1) to paper and fixing the image thereon, characterized in that

—the liquid crystal switching element (3) comprises a ferroelectric liquid crystal material with a chiral smectic C phase and/or a chiral smectic H phase, and

—the liquid crystal driver circuit (50) is designed such that

—the recording period T of each line consists of a print period $T_1$ during which the photoconductive drum (1) is exposed to the dots of light to be recorded, and a drive period $T_2$ during which the photoconductive drum (1) is moved to the next position, and

—within each recording period the equation

$$\int_{t_0}^{t_1} V_1 dt + \int_{t_2}^{t_3} V_2 dt = 0$$

is satisfied for the voltage $V_1$ applied to each shutter portion during each print period $T_1$ and for the voltage $V_2$ applied to each shutter portion during each drive period $T_2$, $t_0$ and $t_1$ designating respectively the beginning and the end of the print period $T_1$, and $t_2$ and $t_3$ designating respectively the beginning and the end of the drive period $T_2$.

8. A printer according to claim 7, characterized in that the liquid crystal driver circuit (50) is designed such that $t_1 = t_2$.

9. A printer according to claim 7 or 8, characterized in that the liquid crystal driver circuit (50) is designed such that $T_1 \geqq T_2$.

10. A printer according to one of claims 7 to 9, characterized in that the liquid crystal driver circuit (50) is designed such that a voltage with a peak of one polarity is applied within the period $T_2$.

11. A printer according to one of claims 7 to 10, characterized in that the liquid crystal driver circuit (50) is designed such that the intensity of light from the light source (6) incident on the light switching element (3) during the period $T_2$ is weaker than that during the period $T_1$.

12. A printer according to one of claims 7 to 11, characterized in that the liquid crystal driver circuit (50) is designed such that the intensity of the light incident on the light switching element (3) during the period $T_2$ is substantially zero.

## Patentansprüche

1. Verfahren zum Ansteuern eines elektrophotographischen Zeilendruckers mit einer photoleitfähigen Trommel und einem Flüssigkristallschaltelement, bei welchem ein flüssiges kristallines Material zwischen einem Plattenpaar angeordnet ist, das an aneinandergrenzenden Oberflächen Elektroden aufweist, wobei unterschiedliche Abdeckbereiche des Schaltelements den Punkten einer Druckzeile entsprechen, dadurch gekennzeichnet, daß

—das flüssige kristalline Material ein ferroelektrisches kristallines Material mit einer chiralen smektischen C-Phase und/oder einer chiralen smektischen H-Phase ist,

—die Aufzeichnungszeit T einer jeden Zeile aus einer Druckzeit $T_1$, während welcher die photoleitfähige Trommel den aufzuzeichnenden Lichtpunkten ausgesetzt ist, und aus einer Ansteuerzeit $T_2$ besteht, während welcher die Trommel in die nächste Position verbracht wird, und daß

—während jeder Aufzeichnungszeit die Gleichung

$$\int_{t_0}^{t_1} V_1 dt + \int_{t_2}^{t_3} V_2 dt = 0$$

für die an jeden Abdeckbereich während jeder Druckzeit $T_1$ angelegte Spannung $V_1$ sowie für die an jeden Abdeckbereich während jeder Ansteuerzeit $T_2$ angelegte Spannung $V_2$ gilt, wobei $t_0$ und $t_1$ jeweils den Anfang und das Ende der Druckzeit $T_1$ und $t_2$ und $t_3$ jeweils den Anfang und das Ende der Ansteuerzeit $T_2$ bezeichnen.

2. Verfahren nach Anspruch 1, dadurch gekennzeichnet, daß $t_1 = t_2$ ist.

3. Verfahren nach Anspruch 1 oder 2, dadurch gekennzeichnet, daß $T_1 \geqq T_2$ ist.

4. Verfahren nach einem der Ansprüche 1 bis 3, dadurch gekennzeichnet, daß eine Spannung mit einer Spitze einer Polarität innerhalb der Ansteuerzeit $T_2$ angelegt wird.

5. Verfahren nach einem der Ansprüche 1 bis 4, dadurch gekennzeichnet, daß die Intensität des von der Lichtquelle (6) auf das Lichtschaltelement auftreffenden Lichts während der Ansteuerzeit $T_2$ schwächer ist als während der Druckzeit $T_1$.

6. Verfahren nach Anspruch 5, dadurch gekennzeichnet, daß die Intensität des während der Ansteuerzeit $T_2$ auf das Lichtschaltelement auftreffenden Lichts im wesentlichen Null ist.

7. Elektrophotographischer Zeilendrucker mit

—einer photoleitfähigen Trommel (1),

—einer optischen Schreibeinheit für die optische Beleuchtung der photoleitfähigen Trommel (1), umfassend

—ein Lichtquellensystem (5, 6),

—ein Flüssigkristallschaltelement (3) zwischen dem Lichtquellensystem (5, 6) und der photoleitfähigen Trommel (1) und mit einem flüssigen kristallinen Material, das zwischen einem Plattenpaar angeordnet ist, das an aneinandergrenzenden Oberflächen Elektroden aufweist, wobei unterschiedliche Abdeckbereiche des Schaltelements den Punkten einer Druckzeile entsprechend, und

—einen Flüssigkristall-Ansteuerkreis,

—bei welchem das Lichtquellensystem (5, 6) so ansteuerbar ist, daß es gleichzeitig mit dem Schalten des Flüssigkristallschaltelements (3) aufleichtet, und

—mit einer Übertragungs- und Fixiereinheit zur Übertragung eines gedruckten Bildes von der photoleitfähigen Trommel (1) auf Papier und Fixierung des Bildes auf diesem, dadurch gekennzeichnet, daß

—das Flüssigkristallschaltelement (3) ein ferroelektrisches flüssiges kristallines Material mit einer chiralen smektischen C-Phase und/oder einer chiralen smektischen H-Phase umfaßt, und

—der Flüssigkristall-Ansteuerkreis (50) so ausgelegt ist, daß

—die Aufzeichnungszeit T einer jeden Zeile aus einer Druckzeit $T_1$, während welcher die photoleitfähige Trommel (1) den aufzuzeichnenden Lichtpunkten ausgesetzt ist, und aus einer Ansteuerzeit $T_2$ besteht, während welcher die photoleitfähige Trommel (1) in die nächste Position verbracht wird, und daß

—während jeder Aufzeichnungszeit die Gleichung

$$\int_{t_0}^{t_1} V_1 dt + \int_{t_2}^{t_3} V_2 dt = 0$$

für die an jeden Abdeckbereich während jeder Druckzeit $T_1$ angelegte Spannung $V_1$ und für die an jeden Abdeckbereich während jeder Ansteuerzeit $T_2$ angelegte Spannung $V_2$ gilt, wobei $t_0$ und $t_1$ jeweils den Anfang und das Ende der Druckzeit $T_1$ und $t_2$ und $t_3$ jeweils den Anfang und das Ende der Ansteuerzeit $T_2$ bezeichnen.

8. Drucker nach Anspruch 7, dadurch gekennzeichnet daß der Flüssigkristall-Ansteuerkreis (50) so ausgelegt ist, daß $t_1 = t_2$.

9. Drucker nach Anspruch 7 oder 8, dadurch gekennzeichnet, daß der Flüssigkristall-Ansteuerkreis (50) so ausgelegt ist, daß $T_1 \geqq T_2$.

10. Drucker nach einem der Ansprüche 7 bis 9, dadurch gekennzeichnet, daß der Flüssigkristall-Ansteuerkreis (50) so ausgelegt ist, daß eine Spannung mit einer Spitze einer Polarität innerhalb der Zeitdauer $T_2$ angelegt wird.

11. Drucker nach einem der An sprüche 7 bis 10, dadurch gekennzeichnet, daß der Flüssigkristall-Ansteuerkreis (50) so ausgelegt ist, daß die Intensität des von der Lichtquelle (6) auf das Lichtschaltelement (3) auftreffenden Lichts während der Zeitdauer $T_2$ schwächer ist als während der Zeitdauer $T_1$.

12. Drucker nach einem der Ansprüche 7 bis 11, dadurch gekennzeichnet, daß der Flüssigkristall-Ansteuerkreis (50) so ausgelegt ist, daß die Intensität des von der Lichtquelle (6) auf das Lichtschaltelement (3) auftreffenden Lichts während der Zeitdauer $T_2$ im wesentlichen Null ist.

**Revendications**

1. Procédé pour commander une imprimante électrophotographique ligne par ligne comportant un cylindre photoconducteur et un élément de commutation à cristal liquide, dans lequel une substance formant cristal liquide est enserrée entre deux plaques comportant des électrodes sur leurs surfaces réciproquement voisines, différentes parties d'obturateur de l'élément de commutation correspondant aux points d'une ligne d'impression, caractérisé en ce que

—la substance formée de cristal liquide est un cristal liquide ferroélectrique comportant une phase smectique chirale C et/ou une phase smectique chirale H,

—la période d'enregistrement T de chaque ligne se compose d'une période d'impression $T_1$, pendant laquelle le cylindre photoconducteur est exposé aux points de lumière devant être enregistrés, et d'une période d'entraînement $T_2$ pendant laquelle cylindre est amené dans la position suivante, et

—pendant chaque période d'enregistrement, l'équation

$$\int_{t_0}^{t_1} V_1 dt + \int_{t_2}^{t_3} V_2 dt = 0$$

est satisfaite pour la tension $V_1$ appliquée à chaque partie d'obturateur pendant chaque période d'impression $T_1$, et pour la tension $V_2$ appliquée à chaque partie d'obturateur pendant chaque période d'entraînement $T_2$, $t_0$ et $t_1$ désignant respectivement le début et la fin de la période d'impression $T_1$ et $t_2$, $t_3$ désignant respectivement le début et la fin de la période d'entraînement $T_2$.

## 0 131 873

2. Procédé selon la revendication 1, caractérisé en ce que l'on a $t_1 = t_2$.

3. Procédé selon la revendication 1 ou 2, caractérisé en ce que l'on a $T_1 \geqslant T_2$.

4. Procédé selon l'une des revendications 1 à 3, caractérisé en ce qu'une tension possédant un maximum d'une polarité est appliquée pendant la période d'entraînement $T_2$.

5. Procédé selon l'une quelconque des revendications 1 à 4, caractérisé en ce que l'intensité de la lumière délivrée par la source de lumière et tombant sur l'élément de commutation de la lumière pendant la période d'entraînement $T_2$ est plus faible que pendant la période d'impression $T_1$.

6. Procédé selon la revendication 5, caractérisé en ce que l'intensité de la lumière tombant sur l'élément de commutation de la lumière pendant la période d'entraînement $T_2$ est sensiblement nulle.

7. Imprimante électrophotographique ligne-par-ligne, comprenant

—un cylindre photoconducteur (1),

—une unité optique d'enregistrement servant à écairer optiquement le cylindre photoconducteur (1), et incluant

—un système formant source de lumière (5, 6),

—un élément de commutation à cristal liquide (3) situé entre le système formant source de lumière (5, 6) et le cylindre photoconducteur (1) et comprenant une substance formant cristal liquide enserrée entre deux plaques munies d'électrodes situées sur leurs surfaces réciproquement voisines, différentes parties d'obturateur de l'élément de commutation correspondant aux points d'une ligne d'impression, et

—un circuit de commande du cristal liquide,

—dans lequel le système formant source de lumière (5, 6) peut être commandé de manière à produire un éclair en synchronisme avec la commutation de l'élément de commutation à cristal liquide (3), et

—une unité de transfert et de fixage servant à transférer une image imprimée du cylindre photoconducteur (1) sur le papier et fixer l'image sur ce dernier, caractérisée en ce que

—l'élément de commutation à cristal liquide (3) comporte un cristal liquide ferroélectrique possédant une phase chirale smectique C et/ou une phase chirale smectique H, et

—le circuit (50) de commande du cristal liquide est conçu de telle sorte que

—la période d'enregistrmeent T de chaque ligne se compose d'une période d'impression $T_1$, pendant laquelle le cylindre photoconducteur (1) est exposé aux points de lumière devant être enregistrés, et d'une période d'entraînement $T_2$, pedant laquelle le cylindre photoconducteur (1) est amené dans la position suivante, et

—pendant chaque période d'enregistrement, l'équation

$$\int_{t_0}^{t_1} V_1 dt + \int_{t_2}^{t_3} V_2 dt = 0$$

est satisfaite pour la tension $V_1$ appliquée à chaque partie d'obturation pendant chaque période d'impression $T_1$, et pour la tension $V_2$ appliquée à chaque partie d'obturation pendant chaque période d'entraînement $T_2$, $t_0$ et $t_1$ désignant respectivement le début et la fin de la période d'impression $T_1$, et $t_2$, $t_3$ désignant respectivement le début et la fin de la période d'entraînement $T_2$.

8. Imprimante selon la revendication 7, caractérisée en ce que le circuit (50) de commande du cristal liquide est conçu de manière que l'on ait $t_1 = t_2$.

9. Imprimante selon la revendication 7 ou 8, caractérisée en ce que le circuit (50) de commande du cristal liquide est agencé de manière que l'on ait $T_1 \geqslant T_2$.

10. Imprimante suivant l'une des revendications 7 à 9, caractérisée en ce que le circuit (50) de commande du cristal liquide est conçu de manière qu'une tension possédant un maximum d'une polarité est appliquée pendant la période $T_2$.

11. Imprimante selon l'une des revendications 7 à 10, caractérisée en ce que le circuit (50) de commande du cristal liquide est agencé de manière que l'intensité de la lumière délivrée par la source de lumière (6) et tombant sur l'élément (3) de commutation de la lumière pendant la période $T_2$ soit plus faible que pendant la période $T_1$.

12. Imprimante selon l'une des revendications 7 à 11, caractérisée en ce que circuit (50) de commande du cristal liquide est agencé de telle sorte que l'intensité de la lumière tombant sur l'élément (3) de commutation de la lumière pendant la période $T_2$ soit sensiblement nulle.

# FIG. 1

# FIG. 2

# FIG. 3(a)   FIG. 3(b)   FIG. 3(c)

8

7

$E = 0$

$-\theta_a$   8   E

$E > E_C$

$+\theta_a$   E

$E < -E_C$

# FIG. 4(a)

13a   10a
9a
V   11   12
8
9b
13b   10b

6

# FIG. 4(b)

10b
$-\theta_a$   8
E
10a
7

# FIG. 4(c)

10b   8   $\theta_a$
10a   E
7

2

## FIG. 5(a)

## FIG. 5(b)

## FIG. 5(c)

## FIG. 6

## FIG. 7

## FIG. 8(a)

## FIG. 8(b)

# FIG. 9(a)

# FIG. 9(b)

# FIG. 10

## FIG. 11(a)

OFF          OFF

$T_1$    $T_2$

$V_{P1}$

0                                    t

$-V_0$

## FIG. 11(b)

OFF          ON

## FIG. 11(c)

OPTICAL TRANSMISSION

$T_1$    $T_2$

0                                    t

## FIG. 11(d)

OPTICAL TRANSMISSION

$T_1$    $T_2$

0                                    t

6

# FIG. 12(a)

# FIG. 12(b)

# FIG. 12(c)

# FIG. 12(d)

## FIG. 13

# FIG. 14

## FIG. 15(a)

## FIG. 15(b)

## FIG. 15(c)

## FIG. 15(d)

## FIG. 16(a)

LUMINOUS INTENSITY

## FIG. 16(b)

LUMINOUS INTENSITY

FIG. 18(a)

APPLIED VOLTAGE

FIG. 18(b)

OPTICAL TRANSMISSION

$S_{ON}$          $S_{OFF}$

# FIG. 17(a)

# FIG. 17(b)

# FIG. 19

20   6

SW

# FIG. 20

CONTROL SIGNAL

T   T

T1   T2   T1   T2

5V

0

LUMINOUS INTENSITY

0

# FIG. 21

100   3

21   10b   10a

6   12

$I_0'$   $I_1$

$I_0$

VB   VA

## FIG. 22

## FIG. 23

FIG. 24(a)

FIG. 24(b)

FIG. 24(c)

## FIG. 25

## FIG. 26